# EUROPÄISCHE PATENTSCHRIFT

(11) **EP 4 177 004 B1**
(45) Veröffentlichungstag und Bekanntmachung des Hinweises auf die Patenterteilung: **06.05.2026**
(21) Anmeldenummer: 22202097.6
(22) Anmeldetag: 18.10.2022
(51) Int. Cl.: B23K 37/04, B23K 37/053, E04H 7/06, B65D 88/08, B23K 101/18

(54) **VORRICHTUNG UND SET ZUM AUSRICHTEN VON METALLPLATTEN STOSSSCHWEISSEN, VERFAHREN ZUM AUSRICHTEN VON METALLPLATTEN FÜR EINEN SCHWEISSVORGANG SOWIE ZUR HERSTELLUNG EINES TANKS UND VERWENDUNG EINER SOLCHEN VORRICHTUNG**
DEVICE AND SET FOR ALIGNMENT OF METAL PLATES FOR BUTT-WELDING, METHOD FOR WELDING AND MANUFACTURING A TANK AND USE OF SUCH A DEVICE
DISPOSITIF ET ENSEMBLE D'ALIGNEMENT DE PLAQUES MÉTALLIQUES POUR LE SOUDAGE BOUT À BOUT , PROCÉDÉ DE PLAQUES MÉTALLIQUES POUR UN PROCESSUS DE SOUDAGE AINSI QUE DE FABRICATION D'UN RÉSERVOIR ET UTILISATION D'UN TEL DISPOSITIF

(30) Priorität: 20.10.2021 DE 102021127252
(43) Veröffentlichungstag der Anmeldung: 10.05.2023
(73) Patentinhaber: SPG Steiner GmbH, 57072 Siegen (DE)
(72) Erfinder: Steiner, Oliver, 57072 Siegen (DE); Achten, Patrick, 57072 Siegen (DE); Kessler, Axel, 57076 Siegen (DE)
(74) Vertreter: karo IP

(56) Entgegenhaltungen:
- US-A- 2 071 246
- US-A- 4 712 779
- US-B1- 10 107 002

## Beschreibung

Die vorliegende Erfindung betrifft eine Vorrichtung und ein Set zum Ausrichten von Metallplatten beim Stoßschweißen. Weiter betrifft die Erfindung Verfahren zum Ausrichten von Metallplatten für einen Schweißvorgang sowie zur Herstellung eines Tanks. Außerdem wird auch eine Verwendung einer solchen Vorrichtung angegeben.

Die Erfindung betrifft insbesondere Montagemittel und Montageschritte zur Herstellung von Tanks zur Lagerung flüssiger und/oder gasförmiger Stoffe, wie insbesondere Ammoniak, Salpetersäure, etc. Diese Stoffe müssen in den Tanks teils auch bei widrigen oder kalten Bedingungen gelagert werden, beispielsweise bei Temperaturen unterhalb von - 30 ° Celsius oder sogar unterhalb von - 40 °Celsius. Es ist bekannt, solche Tanks mit einer Vielzahl von Metallplatten aufzubauen, die zueinander ausgerichtet verschweißt werden. Da die Stoffe teils sehr flüchtig und/oder korrosiv sind, ist eine besonders hochwertige Schweißnaht zwischen diesen Metallplatten besonders wichtig.

Die Metallplatten, insbesondere Stahlplatten, sind bevorzugt großflächig und (etwas) gekrümmt, damit mit diesen möglichst große, runde Tankwände gebildet werden können. Hierfür werden die Metallplatten an ihren Stoßkanten miteinander verschweißt. Die Abmessungen der Metallplatten betragen beispielsweise etwa 2 - 4 Meter mal 6 - 15 Meter, wobei die Plattendicke beispielsweise in einem Bereich von ca. 8 bis 60 Millimeter betragen. Damit lassen sich Tanks mit einem Volumen im Bereich von 5.000 - 200.000 Kubikmeter aufbauen, wobei die Tanks je nach Volumen einen Durchmesser von ca. 10-100 Meter und eine Höhe von ca. 10-50 Meter haben können.

Besondere Probleme verursacht dabei das gasdichte Verschweißen der Metallplatten miteinander, gerade auch unter schwierigen Umgebungsbedingungen. Denn das Gewicht und die Abmessungen der Metallplatten lassen praktisch nur die Ausrichtung der Metallplatten zueinander mit schwerem Gerät, wie beispielsweise Kränen zu. Die Qualität der Schweißnaht hängt ganz besonders von gleichmäßigen Schweißsituationen entlang der Naht ab, insbesondere eine gleichbleibende Überdeckung der Stoßkanten, eine gleichmäßige Geometrie (Abstände der Metallplatten zueinander) und/oder eine gleichmäßige Zusammensetzung des Schweißgefüges.

Bislang wurde versucht, die Schweißsituation mittels an die Metallplatten angeschweißte, insbesondere die Stoßkanten umgreifende, metallische Profile einzustellen. Dies hat jedoch einen sehr hohen Aufwand zur Folge. Außerdem müssen die Profile wieder entfernt werden, was aufgrund der erneuten Belastung der Schweißnaht bzw. deren Umgebung zu Schwachstellen und damit zu Gefügeveränderungen bis hin zu Spannungsrisskorrosion führen kann, gerade wenn in den damit hergestellten Tanks Ammoniak gelagert werden soll.

Aus US 10 107 002 B1 (siehe Oberbegriff von Anspruch 1) ist eine Vorrichtung zum Ausrichten von Metallplatten bei einem Schweißvorgang bekannt, wobei die Vorrichtung ein Auflager mit zwei Schenkeln aufweist, zwischen denen ein Aufnahmespalt für die Metallplatten ausgebildet ist. Weiterhin umfasst die Vorrichtung einen Ausrichtstößel zum vertikalen Ausrichten benachbarter Metallplatten und einen Ausdrückstempel zum Entfernen von Unterlegscheiben der Metallplatten.

US 4 712 779 A offenbart eine Vorrichtung zum Halten von zu schweißenden Metallplatten bei der Herstellung von Lagertanks. Die Vorrichtung umfasst eine Basis-Klemmeinrichtung, die ein Auflager mit zwei Schenkeln aufweist, zwischen denen ein Aufnahmespalt für die Metallplatten ausgebildet ist. Weiterhin weist die Basis-Klemmeinrichtung mehrere Ausrichtmittel in Form von Schrauben auf, mit denen die Basis-Klemmeinrichtung fest mit den Metallplatten verbindbar ist. Die Basis-Klemmeinrichtung ist an einer bereits verschweißten ersten Metallplatte befestigbar und anschließend eine zweite Metallplatte in einer zweiten Klemmeinrichtung der Vorrichtung festklemmbar, um diese mit einer horizontalen Schweißnaht an einer Basis und mit einer vertikalen Schweißnaht an der ersten Metallplatte zu befestigen.

US 2 071 246 A offenbart eine Vorrichtung zur Ausrichtung von zwei übereinander angeordneten Metallplatten, wenn diese zur Herstellung von Wänden oder Tanks miteinander verschweißt werden. Die Vorrichtung umfasst ein Auflager mit zwei Schenkeln, zwischen denen ein Aufnahmespalt für die Metallplatten ausgebildet ist. Weiterhin umfasst die Vorrichtung Klemmeinrichtungen, durch die die Metallplatten in dem Aufnahmespalt festklemmbar sind.

Aufgabe der vorliegenden Erfindung ist es, die mit Bezug auf den Stand der Technik geschilderten Probleme wenigstens teilweise zu lindern.

Insbesondere sollen Vorrichtungen und Verfahren angegeben werden, mit denen das Ausrichten und/oder Schweißen der Metallplatten vereinfacht werden kann. Weiter ist angestrebt, diese Prozesse deutlich schneller auszuführen, auf unnötige Schweißnähte und ggf. auf die sonst übliche Materialprüfung nach Entfernen der angeschweißten Profile verzichten zu können. Daher sollen auch kostengünstigere und weniger dokumentationspflichtige Prozesse angestrebt werden.

Diese Aufgaben werden gelöst mit einer Vorrichtung gemäß den Merkmalen des Anspruchs 1, einem Set gemäß Anspruch 5, Verfahren nach Anspruch 6 und/oder 9 und einer Verwendung gemäß Anspruch 10. Besonders vorteilhafte Weiterbildungen sind in den jeweils abhängigen Ansprüchen angegeben. Die in den Ansprüchen angegebenen Merkmale können in beliebiger, technologisch sinnvoller Weise miteinander kombiniert werden und weitere Ausführungsformen der Erfindung angeben. Die Beschreibung, insbesondere auch im Zusammenhang mit den Figuren, erläutert die Erfindung und gibt weitere bevorzugte Ausgestaltungen an.

Hierzu trägt eine Vorrichtung zum Ausrichten von übereinander anordenbaren Metallplatten beim Stoßschweißen bei, die zumindest ein Auflager und zwei Schenkel umfasst, die mit dem Auflager verbunden sind und sich in eine Erstreckungsrichtung von dem Auflager weg erstrecken. Die Schenkel bilden zwischen sich und in Erstreckungsrichtung einen Aufnahmespalt für die Metallplatten aus. Weiter sind mehrere Ausrichtmittel zur Lagefixierung der Metallplatten in dem Aufnahmespalt vorgesehen. Die Ausrichtmittel umfassen ein Abstandselement, welches den Aufnahmespalt überspannt und an mindestens einem der Schenkel fixierbar ist, wobei das Abstandselement ein Stützlager ist, auf dem eine in dem Aufnahmespalt positionierte Metallplatte auflegbar und transportierbar ist. Mit dem Abstandselement ist eine Distanz zu einer benachbarten, zu verschweißenden Metallplatte einstellbar, wenn die Vorrichtung mit der aufgenommenen Metallplatte über das Abstandselement auf einer Stoßkannte der benachbarten, zu verschweißenden Metallplatte zur Auflage kommt.

Die Vorrichtung kann insbesondere eine Ausricht- und/oder Montagehilfe für den Schweißprozess darstellen. Insbesondere kann die Vorrichtung dazu dienen, mehrere Metallplatten, die (vertikal) übereinander angeordnet werden, zueinander auszurichten, dass diese mit ihrer jeweiligen Stoßkante bzw. Plattendicke ausgerichtet, überdeckend und beabstandet (über einen vorgebbaren Zeitraum dauernd) zueinander positioniert sind. Die Vorrichtung ist insbesondere eingerichtet und so dimensioniert, dass diese Metallplatten mit der Form bzw. den Abmessungen der eingangs beschriebenen Art und/oder deren Gewicht zumindest teilweise ausrichten kann. Mittels der Vorrichtung bzw. einer Mehrzahl solcher Vorrichtungen kann eine Metallplatte angehoben und mit einer vorgegebenen Distanz ihrer zu schweißenden Stoßkante zu einer benachbarten Metallplatte platziert und fixiert werden. Die Vorrichtung ist also insbesondere eingerichtet, mit zwei benachbarten, insbesondere vertikal übereinander angeordneten Metallplatten in Kontakt gebracht zu werden bzw. mit beiden im Montageprozess zu interagieren. Damit ist insbesondere eine Ausrichtung für einen sogenannten "Stumpfstoß" möglich, bei dem die Metallplatten in einer gemeinsamen (leicht gekrümmten) Ebene liegen und sich stirnseitig gegenüberliegen. Damit ist insbesondere die Möglichkeit zum Ausrichten der gegeneinander anordenbaren Metallplatten gegeben, weil die Vorrichtung auch zur vertikalen Ausrichtung an den Stoßstellen einsetzbar ist.

Die Vorrichtung hat bevorzugt ein einziges Auflager, welches insbesondere so eingerichtet ist, dass die Vorrichtung auf einer (der Schweißnaht gegenüberliegenden) Stoßkante einer Metallplatte liegen- bzw. mit einer schmalen Auflagefläche (etwa entsprechend der Plattendicke) aufliegen kann. Das Auflager ist so gestaltet bzw. dimensioniert, dass es das Eigengewicht der Vorrichtung sowie das (zumindest halbe) Gewicht einer Metallplatte tragen kann. Das Auflager kann mit einer Metallkonstruktion bzw. einem Metallprofil (z.B. nach Art eines U-Profils) gebildet sein. An dem Auflager kann auch eine Aufhängung vorgesehen sein, an der die Vorrichtung mit der Metallplatte angehoben werden kann.

Das Auflager kann auch eine Verschiebeeinheit umfassen, mittels derer die Vorrichtung auf einer Stoßkante der Metallplatte verschieblich ist. Hierfür kann eine Rollenführung vorgesehen sein, die ein Gleiten bzw. Abrollen des Auflagers entlang der Stoßkante ermöglicht. Es ist weiter möglich, dass diese Verschiebeeinheit arretierbar ist, also ein Feststellmechanismus vorgesehen ist, der ein unerwünschtes Verschieben des Auflagers nach Einstellung der gewünschten Position verhindert.

Ausgehend von dem Auflager erstrecken sich zwei Schenkel entlang einer Erstreckungsrichtung. Die Erstreckungsrichtung weist insbesondere in die Richtung ausgehend von dem Auflager, welche der Richtung hin zur Aufhängung entgegen weist und/oder von der Auflagefläche für die Metallplatte ausgeht. Die Schenkel können im Wesentlichen gleich gestaltet und ggf. in etwa spiegelsymmetrisch an zwei (bevorzugt voneinander horizontal beabstandeten) Stellen des Auflagers fest fixiert bzw. angeschweißt sein. Die Schenkel können mit zusammengeschweißten Metallprofilen gebildet sein.

Zwischen sich bilden die Schenkel einen Aufnahmespalt für eine oder mehrere Metallplatten aus. Die Schenkel sind also hin zum Aufnahmespalt insbesondere mit planen oder gering gekrümmten Schenkelflächen ausgebildet, die relativ plan an den Oberflächen der Metallplatte anliegen können. Eine Spaltweite liegt hierbei bevorzugt im Bereich von mindestens 15 mm [Millimeter] in einem Bereich nahe des Auflagers. Die Spaltweite kann, insbesondere in Erstreckungsrichtung ausgehend von dem Auflager, verschieden ausgeführt sein, insbesondere größer. Bevorzugt ist, dass die Spaltweite einen Wert von 80 mm nicht überschreitet. Der Aufnahmespalt ist an dem, dem Auflager gegenüberliegenden Ende offen, so dass dort insbesondere die hier genannten Metallplatten einführbar sind. Die Stahl- bzw. Metallplatten werden meistens nach oben hin (in Richtung Tankdach) dünner, was bedeutet, dass die Wandstärke bzw. Plattendicke der Metallplatten der oberen Reihe dünner ist als die der unteren Reihe. Die Schenkel der Vorrichtung sind vorteilhafterweise am unteren bzw. offenen Ende leicht abgewinkelt (beispielsweise mit einem Öffnungswinkel von etwa 10° bis 45°), zum leichten Aufschieben der Vorrichtung auf die Metallplatte. Das ist insbesondere hilfreich, wenn die oberen Metallplatten dünner als die unteren Platten sind.

Weiter sind eine Mehrzahl oder sogar Vielzahl von Ausrichtmitteln zur Lagefixierung der Metallplatten in dem Aufnahmespalt vorgesehen. Die Ausrichtmittel sind insbesondere dazu eingerichtet, eine Einstellung der Relativlage von Schenkel bzw. Vorrichtung zur Metallplatte vorzunehmen, wenn diese miteinander in Eingriff sind. Die Ausrichtmittel können beispielswiese so gestaltet und eingerichtet sein, dass die Schenkel jeweils (zumindest in der Metallplatte gegenüberliegenden Abschnitten) in gleicher Nähe zu der Oberfläche der Metallplatte positioniert ist. Die Ausrichtmittel sind bevorzugt nicht als Klemmelemente in dem Sinne ausgeführt, dass diese durch einen einstellbaren Druck auf die Oberfläche der Metallplatte diese mit ihrem Gewicht halten können. Vielmehr ist damit im Wesentlichen (nur) eine Ausrichtung der Schenkelflächen relativ zu den Oberflächen der im Aufnahmespalt aufgenommenen Metallplatte und/oder ein (vertikales) Niveau der Metallplatte relativ zu dem Auflager zu erreichen. Bevorzugt sind über die Länge der Schenkel in Erstreckungsrichtung mit etwa gleichem Abstand mehrere solcher Ausrichtmittel vorgesehen. Es sind verschiedene Ausrichtmittel an einem oder beiden Schenkeln vorgesehen. Bevorzugt ist, dass in einem etwa mittigen Abschnitt der Schenkel ein anderes Ausrichtmittel vorgesehen ist als in den übrigen Bereichen der Schenkel. Besonders bevorzugt ist, dass das etwa mittige Ausrichtmittel (vorrangig) die Ausrichtung der Metallplatte hinsichtlich des (vertikalen) Niveaus in dem Aufnahmespalt (z. B. nach Art eines Stützlagers) und die weiteren Ausrichtmittel (vorrangig) die Ausrichtung der Metallplatte hinsichtlich der Schenkelflächen gegenüber der Oberfläche der Metallplatte bestimmen. Ein "Ausrichtmittel" ist insbesondere eine Einrichtung mit mindestens einem Verstellelement, die eine Relativlage von aufgenommener Metallplatte hin zu dem Schenkel einstellen und/oder fixieren kann.

Die Ausrichtmittel umfassen ein Abstandselement, welches den Aufnahmespalt überspannt und an jedem der beiden Schenkel fixierbar ist. Bevorzugt ist, dass das Abstandselement an jedem der beiden Schenkel lösbar fixierbar ist. Das Abstandselement kann insbesondere (nur) im mittigen Bereich der Schenkel vorgesehen sein. Das Abstandselement ist ein Stützlager, auf dem die in dem Aufnahmespalt positionierte Metallplatte aufliegt. Die Metallplatte ist durch das Abstandselement bzw. das Stützlager in dem Aufnahmespalt haltbar, sodass die Metallplatte mithilfe der Vorrichtung hebbar und/oder transportierbar ist. Die Metallplatte kann insbesondere durch die Vorrichtung (und ggf. zumindest einem mit der Vorrichtung verbundenen Kran) beispielsweise von einem Metallplattenlagerort, einem (Erd-)Boden, einem Transportmittel, einem Bodentransportmittel und/oder einem LKW anhebbar und/oder (insbesondere zu einem Montageort der Metallplatte) transportierbar sein. Die Metallplatte ist mit einer oder mehrerer der Vorrichtungen (und ggf. dem zumindest einen mit der Vorrichtung verbundenen Kran) anhebbar und/oder transportierbar, insbesondere ohne dass weitere Hebewerkzeuge und/oder Transportwerkzeuge an der Metallplatte befestigt werden müssen. Das Abstandselement kann mit Metall geformt sein. Das Abstandselement kann plattenförmig gestaltet sein. Die Schenkel können jeweils eine Abstandselementöffnung aufweisen, so dass das Abstandselement durch diese Abstandselementöffnungen hindurchgesteckt werden kann und damit den Aufnahmespalt überspannt bzw. eine darin positionierte Metallplatte gegen Durchgleiten blockiert. Die durch die Abstandselementöffnungen hinausragenden Enden des Abstandselements können mit Schlitzen ausgeführt sein, in die Arretierungen (z. B. in Form von Bolzen, Haken, Keilen, etc.) eingebracht werden können, so dass die Relativlage von Abstandselement und Schenkel fixiert sind. Das Abstandselement ist so gestaltet, dass dieses eine Distanz zur benachbarten, zu verschweißenden Metallplatte einstellt, wenn die Vorrichtung mit der aufgenommenen Metallplatte über das Abstandselement auf deren Stoßkante zur Auflage kommt. Diese Distanz ist insbesondere über die Materialstärke des Abstandselements vorgegeben.

Die Ausrichtmittel können mehrere in Erstreckungsrichtung voneinander beabstandete Einstellelemente umfassen, mittels derer eine Spaltweite des Aufnahmespalts einstellbar ist. Bevorzugt ist, dass diese Einstellelemente die Spaltweite jeweils über einen (ggf. gleich großen) Einstellbereich variabel einstellen können. Es ist möglich, dass die Metallplatte oder die im Aufnahmespalt angeordneten Metallplatten in Erstreckungsrichtung bzw. in vertikale Richtung eine abweichende, sich nach oben verringernde Plattendicke aufweisen. Die Einstellelemente können demnach auch einen Öffnungswinkel des Aufnahmespalts an diese variierende Plattendicke anpassen, so dass die Schenkelflächen stets einen ausreichend gleichmäßigen Abstand zur Oberfläche der Metallplatten aufweisen. Die Einstellelemente können eine Einstellbasis auf der dem Aufnahmespalt abgewandten Schenkelseite mit einer Durchgangsöffnung umfassen, durch die ein Einstellbolzen gegen die Oberfläche der Metallplatte (verschieblich) verstellbar bzw. drückbar ist, so dass der mit der Einstellbasis verbundene Einstellbolzen ggf. den Schenkel von der Oberfläche entfernen kann. Bevorzugt ist, dass 3, 4, 5 oder 6 solcher Einstellelemente über die Länge des Schenkels verteilt angeordnet sind. Bevorzugt ist, dass die Anzahl und Lage der Ausrichtmittel mit Einstellelementen beider Schenkel gleich sind.

Die Schenkel weisen bevorzugt eine Länge in Erstreckungsrichtung von mindestens 3 Metern auf. Bevorzugt beträgt die Länge mindestens 130 % der (vertikalen) Höhe der zu montierenden Metallplatte, insbesondere mindestens 150 % dieser Höhe. Die Länge liegt bevorzugt im Bereich von 5 Meter bis 10 Meter. Es ist möglich, dass die Länge der Schenkel einstellbar ist, insbesondere in dem vorstehend genannten Bereich. Hierfür können beispielsweise Schenkeleinsatzelemente zur Verlängerung dienen, und/oder es können teleskopartige Schenkelelemente vorgesehen sein. Damit ist die Einstellung der Länge an die jeweilige Höhe der Metallplatten einfach ermöglicht. Insbesondere in diesem Zusammenhang kann es sinnvoll sein, auch die Lage der Ausrichtmittel über die Erstreckungsrichtung der Schenkel verstellbar auszuführen.

Die Schenkel sind insbesondere mit einem Stahlträger gebildet. Es ist insbesondere möglich, dass ein Schenkel mit einer Mehrzahl von geschweißten Stahlprofilen gebildet ist.

Gemäß einem weiteren Aspekt wird ein Set zum Ausrichten von Metallplatten beim Stoßschweißen vorgeschlagen, welches mindestens eine Vorrichtung der hier offenbarten Art und mindestens eine Klemmzwinge für nebeneinander anordenbare Metallplatten umfasst. Das Set umfasst bevorzugt zwei Vorrichtungen und zwei Klemmzwingen. Während die Vorrichtungen dazu eingerichtet sind, in einem inneren Bereich der Metallplatten angeordnet zu werden und die zu schweißenden Metallplatten vertikal zueinander auszurichten, können die Klemmzwingen eine Ausrichtung zu lateral bzw. in Umfangsrichtung des Tanks anzuordnenden bzw. zu verschweißenden Metallplatten erreichen. Die Klemmzwinge kann insbesondere eine (vertikal oben positionierte) Stoßkante zweier lateral benachbarter Metallplatten umgreifen und mittels einer Klemmleiste zueinander ausrichten bzw. fixieren (im Bereich der jeweiligen Ecke der Metallplatten). Solche einfach lösbaren Klemmzwingen ergänzen die Vorrichtungen zu einem Set für eine deutlich vereinfachte Montage bzw. einen einfacheren und sicheren Schweißprozess.

Gemäß einer Ausgestaltung der Vorrichtung ist möglich, dass die Vorrichtung mit einem Auflager ausgebildet ist, welches eine integrierte Klemmzwinge umfasst. Es kann insbesondere ein Set vorgesehen sein, welches Vorrichtungen mit und ohne integrierte Klemmzwinge umfasst.

Für den Fall, dass die Vorrichtung selbst eine Klemmzwinge integriert umfasst, sind bevorzugt in die Schenkel und in Erstreckungsrichtung verlaufende Ausnehmungen vorgesehen, durch die die darunter verlaufenden, vertikalen Stoßkanten der in Umfangsrichtung benachbarten Metallplatten (abschnittsweise) schweißbar sind.

Weiter wird auch ein Verfahren zum Ausrichten von Metallplatten für einen Schweißvorgang vorgeschlagen, welches zumindest die folgenden Schritte umfasst:
a. Bereitstellen mindestens einer hier vorgeschlagenen Vorrichtung,
b. Auflegen eines Auflagers der Vorrichtung auf eine erste Stoßkante einer ersten Metallplatte, so dass diese sich teilweise durch einen Aufnahmespalt der Vorrichtung hindurch erstreckt,
c. Positionieren der ersten Metallplatte über einer zweiten Metallplatte mit Hilfe der Vorrichtung, so dass die zweite Metallplatte sich auch teilweise durch den Aufnahmespalt hindurch erstreckt,
d. Fixieren der Lage der Metallplatten zueinander in dem Aufnahmespalt mittels mehrerer Ausrichtmittel der Vorrichtung.

Das Verfahren wird mit einer oder mehreren Vorrichtungen der hier offenbarten Art durchgeführt. Auch unabhängig davon können die Erläuterungen zur Vorrichtung auch zur Charakterisierung des Verfahrens herangezogen werden und umgekehrt.

Die Nummerierung der Schritte mit der Reihenfolge a. bis d. bedeutet nicht, dass diese Schritte zwingend sequentiell und unmittelbar hintereinander auszuführen sind. Vielmehr ist ausreichend, dass diese zumindest einmal ausgeführt werden. So können die Schritte einander zumindest teilweise (zeitlich) überlappen, unterschiedlich oft wiederholt werden und/oder nach weiteren Zwischenschritten ausgeführt werden. Beispielsweise kann eine einmal gemäß Schritt a. bereitgestellte Vorrichtung mehrmals für die Folgeschritte b., c., d. benutzt werden. Ebenso ist möglich mehrere Vorrichtungen gemäß Schritt a., gemäß Schritten b. aufzulegen und/oder c. zu positionieren (nacheinander oder zumindest teilweise zeitlich versetzt), bevor Schritt d. ausgeführt wird.

Schritt a. umfasst insbesondere den Einsatz der hier offenbarten Vorrichtung.

Schritt b. umfasst insbesondere, dass die Vorrichtung so über die erste Metallplatte übergestülpt wird, dass diese in dem Aufnahmespalt angeordnet ist und das Auflager der Vorrichtung auf der Stoßkante aufliegt. Dieser Vorgang kann so realisiert werden, dass die Metallplatte aufgestellt wird und dann die Vorrichtung, beispielsweise über die Aufhängung mittels des Krans darüber ausgerichtet und dann abgesenkt wird.

Es ist möglich, dass die Ausrichtmittel nun eingesetzt werden, um die Relativlage der ersten Metallplatte an bzw. nahe des Auflagers in dem Aufnahmespalt der Vorrichtung zu fixieren. Insbesondere kann ein Zustand eingestellt werden, dass die Vorrichtung eine solch fixierte Metallplatte nun anheben und verfahren kann.

Die erste Metallplatte kann insbesondere durch die Ausrichtmittel, das Abstandselement und/oder das Stützlager in dem Aufnahmespalt gehalten werden, sodass insbesondere die erste Metallplatte mithilfe der Vorrichtung hebbar und/oder transportierbar ist. Die erste Metallplatte kann insbesondere durch die Vorrichtung (und ggf. zumindest einem mit der Vorrichtung verbundenen Kran) beispielsweise von einem Metallplattenlagerort, einem (Erd-)Boden, einem Transportmittel, einem Bodentransportmittel und/oder einem LKW angehoben und/oder (insbesondere zu einem Montageort der ersten Metallplatte und/oder einer zweiten Metallplatte) transportiert werden. Die Metallplatte kann mit einer oder mehrerer der Vorrichtungen (und ggf. dem zumindest einen mit der Vorrichtung verbundenen Kran) angehoben und/oder transportiert werden, insbesondere ohne dass hierfür weitere Hebewerkzeuge und/oder Transportwerkzeuge an der Metallplatte befestigt werden müssen.

Die erste Metallplatte kann dann (allein) gehalten von einer oder mehrerer Vorrichtungen (vertikal über) der zweiten Metallplatte positioniert werden, wobei dieser Schritt c. so ausgeführt wird, dass die zweite Metallplatte in dem unteren Bereich des Aufnahmespalts etwa fluchtend zur ersten Metallplatte aufgenommen wird. So wird eine Ausrichtung der beiden Stoßkanten der Metallplatten zueinander für den anstehenden Schweißprozess sicher erreicht, weil diese Zufahrbewegung über die Vorrichtung bzw. Schenkel geführt und schließlich exakt ausgeführt werden kann.

Ist eine (vorläufige) Grobausrichtung erfolgt, kann nunmehr die für den Schweißvorgang vorzunehmende Fixierung der gewünschten exakten Lage der beiden Metallplatten zueinander über die Ausrichtmittel der Vorrichtung erfolgen. Zusätzlich können auch die Klemmzwingen zum Einsatz kommen. Es ist möglich, dass in dem Schritt b. nur noch die Ausrichtmittel mit den Einstellmitteln betätigt werden, die mit der zweiten Metallplatte interagieren - es ist also ebenso möglich, dass die Ausrichtmittel, die nur oder auch mit der ersten Metallplatte interagieren vor Schritt d. eingestellt werden (z. B. in Schritt c.).

Schritt c. oder Schritt d. kann ein Hindurchstecken eines Abstandselements durch den Aufnahmespalt und beidseitiges fixierend des Abstandselements an je einem Schenkel umfasst. Es ist möglich, dass zunächst das Auflager in unmittelbaren Kontakt mit der ersten Stoßkante der ersten Metallplatte gebracht und dann das Abstandselement durch den Aufnahmespalt und die Schenkel hindurchgesteckt wird. Nach dessen Arretierung kann die Vorrichtung samt erster Metallplatte verfahren werden, wobei dann ggf. die erste Metallplatte (aufgrund der Gewichtskraft) auf dem Abstandselement aufliegt.

Schritt d. kann das Einstellen einer Spaltweite und/oder einer Klemmung der (mindestens einen) Metallplatte in dem Aufnahmespalt umfassen. Die Spaltweite kann dabei unterschiedlich über die Erstreckungsrichtung aber mit gleichem Abstand zu der Oberfläche der Metallplatten eingestellt werden. Damit kann auch eine in Erstreckungsrichtung unterschiedliche Plattendicke ausgeglichen werden, sodass eine Belastung der Metallplatten bei der Montage trotz ihrer unterschiedlichen Plattendicke von der Vorrichtung gleich einstellbar ist.

Gemäß noch einem weiteren Aspekt wird ein Verfahren zur Herstellung eines Tanks angegeben, der mit miteinander verschweißten Metallplatten aufgebaut wird, wobei das Verfahren zumindest folgende Schritte umfasst:
x) Ausrichten einer anzuschweißenden ersten Mettallplatten hin zu einer (insbesondere bereits verschweißten) zweiten Metallplatte mittels einer hier beschriebenen Vorrichtung und/oder mittels eines hier beschriebenen Verfahrens,
y) Stoßschweißen zumindest der ersten Metallplatte mit der zweiten Metallplatte,
z) Entfernen der mindestens einen Vorrichtung.

Auch hier gilt, dass die Nummerierung der Schritte mit der Reihenfolge x) bis z) nicht bedeutet, dass diese Schritte zwingend sequentiell und unmittelbar hintereinander auszuführen sind. Vielmehr ist ausreichend, dass diese zumindest einmal ausgeführt werden. So können die Schritte einander zumindest teilweise (zeitlich) überlappen, unterschiedlich oft wiederholt werden und/oder nach weiteren Zwischenschritten ausgeführt werden. Beispielsweise können die Schritte in unterschiedlichen Sektoren des Tanks zu unterschiedlichen Zeitpunkten oder kombiniert miteinander ausgeführt werden. Bei dem Tank kann es sich zum Beispiel um einen zylindrischen Behälter (z.B. in der Art eines Silos o.ä.) handeln.

Im Rahmen des Schrittes x) kommen bevorzugt zumindest einige der hier offenbarten Schritte a. bis d. zum Einsatz. Bevorzugt ist, dass pro Metallplatte zwei Vorrichtungen eingesetzt werden, die etwa mit gleichem Abstand zur Mitte der Metallplatte und deren lateralen Seitenkanten positioniert werden. Sind die Vorrichtungen mit der ersten Metallplatte über der zweiten Metallplatte positioniert, liegt auch ein unterer Bereich der Schenkel an der inneren und der äußeren Oberfläche der zweiten Metallplatte an, insbesondere über eine Länge von mindestens 2 Meter. Die Distanz zwischen den benachbarten und miteinander zu verschweißenden Stoßkanten der Metallplatten beträgt bevorzugt gleichmäßig ca. 3 mm bis 5 mm [Millimeter].

Schritt y) kann auch mehrere Schweißprozesse umfassen, muss aber nicht alle Schweißprozesse zum vollständigen Verschweißen der mittels der Vorrichtung(en) zueinander ausgerichteten und fixierten Metallplatten umfassen. Es ist beispielsweise möglich, Punkt- oder Teilschweißungen zwischen bzw. benachbart zu der mindestens einen Vorrichtung auszuführen, die dann nach Schritt z) vervollständigt bzw. komplettiert werden. Es ist bevorzugt, zumindest den Bereich der Distanz der horizontal verlaufenden Stoßschweißnaht zunächst auszulassen, der von der mindestens einen Vorrichtung überspannt wird. Diese Bereiche können dann nach Entfernen der Vorrichtung, ggf. unter Verbleib des Abstandselements darin, verschweißt werden. Bevorzugt ist, dass die vertikalen Schweißnähte von zueinander in Umfangsrichtung benachbarten Metallplatten (weitestgehend) vollständig geschweißt werden, bevor die mindestens eine Vorrichtung (gemäß Schritt z)), die mit dieser Metallplatte zusammenwirkt, entfernt wird.

Mit dem Verfahren kann insbesondere ein eingangs beschriebener Tank hergestellt werden.

Schließlich wird noch die Verwendung einer hier offenbarten Vorrichtung (oder eines hier offenbarten Sets) zum Transportieren, Ausrichten und Schweißen von Metallplatten bei der Herstellung von gasdichten Fluid-Tanks vorgeschlagen. Die Vorrichtung kann zusätzlich zum Heben, Anheben und/oder Transportieren von Metallplatten verwendet werden.

Die Erläuterungen zu der Vorrichtung und/oder dem Set können auch zur Charakterisierung des Herstellverfahrens und der Verwendung herangezogen werden und umgekehrt.

Vorsorglich wird auch darauf hingewiesen, dass die Benennung von Bauteilen mit "erste", "zweite"... nicht zwingend eine Reihenfolge zum Ausdruck bringen soll, sondern - ohne anderslautende explizite Erwähnung - lediglich zur Unterscheidung von im Wesentlichen gleichartigen Bauteilen dienen soll. Soweit hiervon "horizontal/vertikal" oder "unten/oben" die Rede ist, bezieht sich dies auf die Einbausituation beim Tank.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: einen Tank,
- Fig. 2:: ein Sektor einer Tankwand, aufgebaut mit Metallplatten,
- Fig. 3:: eine Seitenansicht einer Vorrichtung zum ausgerichteten Stoßschweißen von übereinander anordenbaren Metallplatten,
- Fig. 4:: eine Frontalansicht der Vorrichtung aus Fig. 3,
- Fig. 5:: eine seitliche Schnittansicht eines Ausrichtmittels der Vorrichtung mit einem Abstandselement,
- Fig. 6:: eine Draufsicht auf das Ausrichtmittel aus Fig. 5,
- Fig. 7:: eine seitliche Schnittansicht eines Ausrichtmittels mit einem Einstellelement,
- Fig. 8:: eine Seitenansicht einer Klemmzwinge,
- Fig. 9:: eine Frontalansicht der Klemmzwinge aus Fig. 8,
- Fig. 10 bis 14:: verschiedene perspektivische Ansichten der Vorrichtung aus Fig. 3,
- Fig. 15:: eine perspektivische Ansicht der Klemmzwinge aus Fig. 8,
- Fig. 16 und 17:: vorteilhafte Modifikationen der hier beschriebenen Vorrichtung.

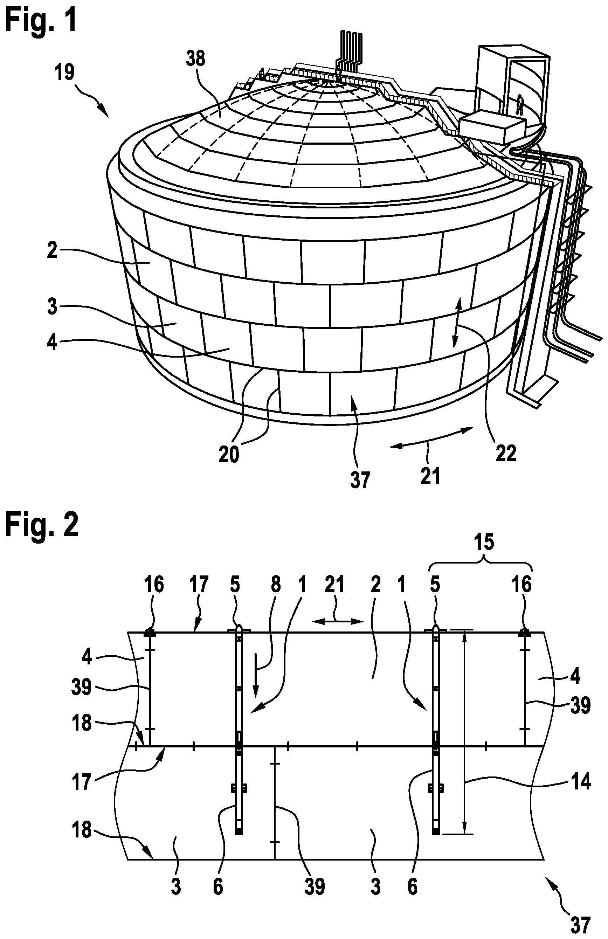

Fig. 1 zeigt in einer perspektivischen Darstellung einen Tank 19, der zur (gekühlten) Lagerung flüssiger und/oder gasförmiger Stoffe, wie insbesondere Ammoniak, Salpetersäure, etc. geeignet ist. Das Tankvolumen wird insbesondere von einer im Wesentlichen zylindrischen, eine Umfangsrichtung 21 definierende Tankwand 37 und eine Dachkonstruktion 38 begrenzt. Die Tankwand 37 ist mit einer Vielzahl von Metallplatten 2, 3, 4 gebildet, die über Stoß miteinander verschweißt sind, so dass in Umfangsrichtung 21 und in vertikaler Richtung 22 fluiddichte Schweißnähte 20 gebildet sind.

Ein Sektor der Tankwand 37 ist in Frontalansicht in Fig. 2 dargestellt. Die Tankwand 37 ist mit Metallplatten 2, 3, 4 gebildet, die in Reihen entlang der Umfangsrichtung 21 ausgerichtet angeordnet sind. Die Metallplatten 2, 3, 4 sind in benachbarten, übereinander liegenden Reihen versetzt zueinander angeordnet. Jede Metallplatte 2, 3, 4 hat eine (obere) erste Stoßkante 17 und eine (untere) zweite Stoßkante 18. Eine erste Metallplatte 2 ist beispielsweise mit ihrer (unteren) zweiten Stoßkante 18 mit der (oberen) ersten Stoßkante 17 der darunter angeordneten zweiten Metallplatte 3 über Stoß verschweißt. Eine erste Metallplatte 2 ist insbesondere auch mit einer lateralen Stoßkante 39 mit der lateralen Stoßkante 39 der seitlich benachbart angeordneten dritten Metallplatte 4 über Stoß verschweißt.

Es ist weiter zu erkennen, dass die unten dargestellte Reihe von Metallplatten 3 bereits miteinander verschweißt sind, und nun die obere Reihe von Metallplatten 2, 4 dort ausgerichtet positioniert sind, um die Schweißprozesse in der oberen Reihe ausführen zu können.

Auf der oben zentral dargestellten Metallplatte 2 liegen zwei Vorrichtungen 1 zum ausgerichteten Stoßschweißen von übereinander anordenbaren Metallplatten 2, 3 auf, etwa mit gleichem Abstand zu deren lateralen Stoßkanten 39 und deren Mitte. Die Vorrichtungen 1 weisen jeweils ein Auflager 5 auf, dass auf der ersten Stoßkante 17 der Metallplatte 2 aufliegt. Die Vorrichtung 1 hat zwei Schenkel, wobei in dieser Frontalansicht nur der außenliegende erste Schenkel 6 dargestellt ist, der zweite Schenkel 7 ist hinter der Metallplatte 2 angeordnet und daher nicht erkennbar. Eine Länge 14 der Schenkel 6, 7 ist so gewählt, dass die Schenkel 6, 7 die erste Metallplatte 2 überspannen und auch einen Höhenabschnitt der darunter angeordneten zweiten Metallplatten 3 überspannen.

Das Ausrichten bzw. Einstellen der Schweißgeometrie erfolgt hierbei mit einem Set 15 aus zwei Vorrichtungen 1 und zwei (optionalen, hier aber dargestellten) Klemmzwingen 16. Die Klemmzwingen 16 sind im Übergangsbereich der lateralen Stoßkanten 39 von erster Metallplatte 2 und in Umfangsrichtung 21 benachbarter dritter Metallplatte 4 vorgesehen. Die Klemmzwingen 16 umgreifen jeweils beide ersten Stoßkanten der beiden Metallplatten 2, 4.

Mittels der Vorrichtungen 1 und ggf. der Klemmzwingen 16 sind die Metallplatten 2, 3, 4 so zueinander ausgerichtet und fixiert, dass nun Schweißprozesse durchgeführt werden können. Die Vorrichtungen 1 und ggf. die Klemmzwingen 16 können nach den Schweißprozessen (bevorzugt vollständig) wieder entfernt werden.

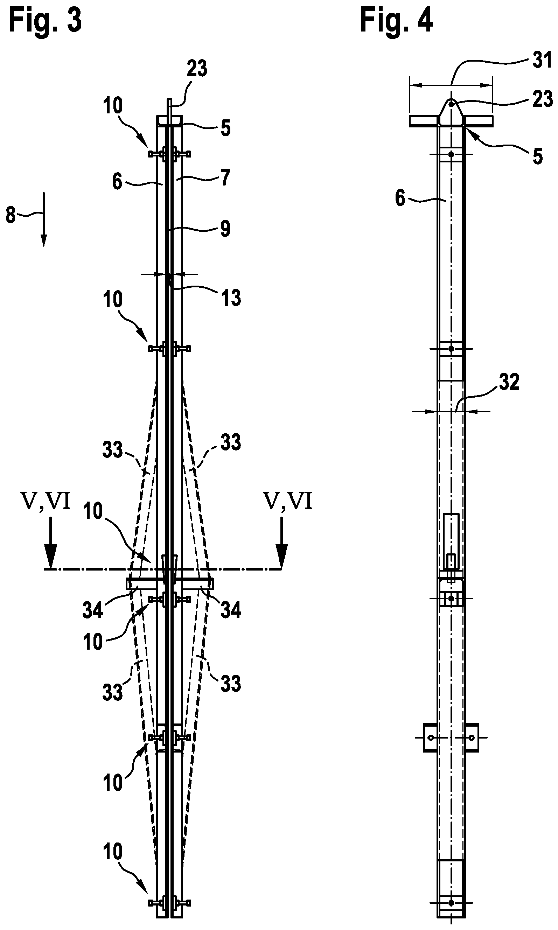

Die Fig. 3 und 4 zeigen ein Ausführungsbeispiel einer Vorrichtung 1 zum ausgerichteten Stoßschweißen von übereinander anordenbaren Metallplatten, wobei Fig. 3 eine Seitenansicht und Fig. 4 eine Frontalansicht der Vorrichtung 1 ist. Beide Figuren werden nun gemeinsam erläutert.

Die Vorrichtung hat ein Auflager 5 sowie einen ersten Schenkel 6 und einen zweiten Schenkel 7. Die Schenkel 6, 7 sind mit dem Auflager 5 verbunden und erstrecken sich in eine Erstreckungsrichtung 8 von dem Auflager 5 weg. Die Schenkel 6, 7 bilden zwischen sich und in Erstreckungsrichtung 8 einen Aufnahmespalt 9 für die (hier nicht dargestellten) Metallplatten aus. Weiter sind mehrere Ausrichtmittel 10 zur Lagefixierung der Metallplatten in dem Aufnahmespalt 9 vorgesehen.

An dem Auflager 5 kann eine Aufhängung 23 vorgesehen sein, die beispielsweise einen Transport der Vorrichtung (mit Metallplatte) mittels eines Krans ermöglicht. Das Auflager 5 kann nach Art eines U-Stahl-Profils gefertigt sein. Das Auflager 5 hat eine Weite 31 (entlang hier nicht dargestellten ersten Stoßkante 17 einer Metallplatte 2), die gegenüber einer Breite 32 der Schenkel 6, 7 vergrößert (beispielsweise etwa um den Faktor 3) ist, um ein sicheres Aufliegen zu ermöglichen. Die Schenkel 6, 7 können an dem Auflager 5 angeschweißt sein, wobei dies so eingerichtet ist, dass sich ausgehend von dem Auflager 5 ein definierter Aufnahmespalt 9 mit einer vorgegebenen Spaltweite 13 ergibt bzw. einstellen lässt.

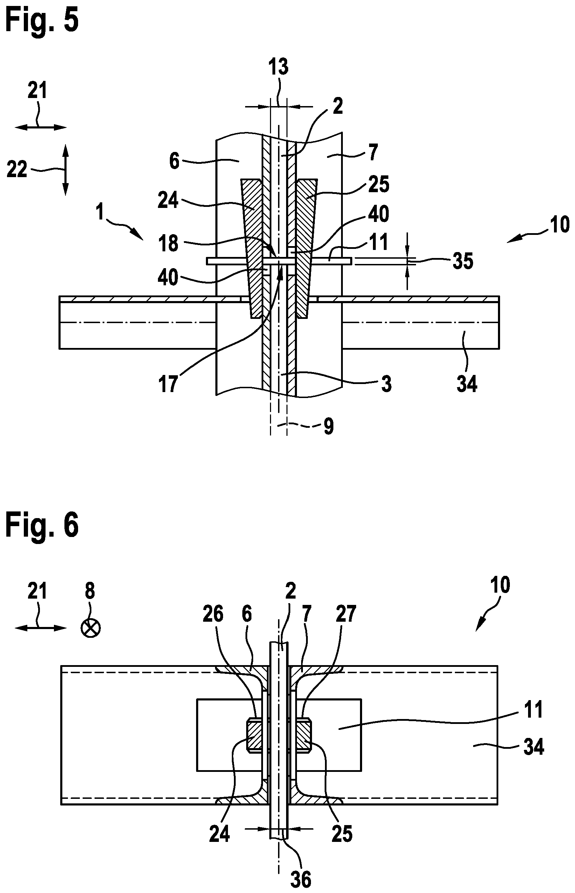

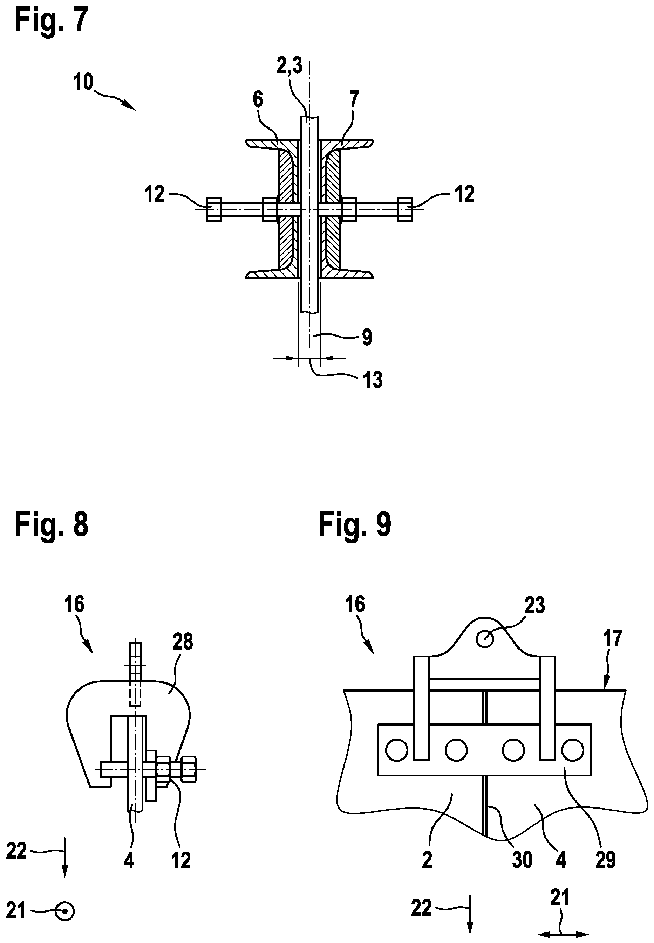

An jedem Schenkel 6, 7 und paarweise auf demselben Höhenniveau sind eine Vielzahl Ausrichtmittel 10 vorgesehen. Etwas unterhalb des mittleren Höhenniveaus ist eine Basis 34 vorgesehen, in deren Bereich auch ein Ausrichtmittel 10 vorgesehen ist, deren bevorzugte Gestalt mit den Fig. 5 und 6. näher erläutert werden. Oberhalb und unterhalb der Basis 34 sind bevorzugt die gleiche Anzahl an Ausrichtmitteln 10 vorgesehen, wobei diese bevorzugt so gestaltet sind, wie im Detail anhand von Fig. 7 erläutert.

Die Schenkel 6, 7 können ebenfalls mit Stahlträgern gebildet sein. Hierbei kann ein Schenkel 6, 7 mit einem langen Stahlträger ausgeführt sein, der sich vollständig über die Länge der Schenkel 6, 7 erstreckt. Zur Versteifung kann der Schenkel 6, 7 auf der dem Aufnahmespalt 9 abgewandten Seite (metallische) Streben 33 aufweisen, die insbesondere nach Art eines Stützwerks den langen Stahlträger mit der Basis 34 verbinden.

Ein Detail der Vorrichtung 1, nämlich eine seitliche Schnittansicht eines Ausrichtmittels 10 mit einem Abstandselement 11 ist in Fig. 5 dargestellt. Eine zugehörige Draufsicht zeigt Fig. 6. Auch diese beiden Figuren werden gemeinsam erläutert. In diesen Darstellungen ist die montierte Situation veranschaulicht, also eine Situation, bei der Metallplatten 2, 3 in dem Aufnahmespalt 9 ausgerichtet aufgenommen sind.

Zu erkennen sind die beiden (als U-Profil ausgestalteten) Schenkel 6, 7 und die Basis 34 sowie der Aufnahmespalt 9. Das Ausrichtmittel 10 mit dem Abstandselement 11 ist in unmittelbarer Nachbarschaft (oberhalb) zur Basis 34 vorgesehen. Die Schenkel 6, 7 weisen gegenüberliegend Abstandselementöffnungen 40 auf, durch die das Abstandselement 11 durch die Schenkel 6, 7 hindurchgeführt werden kann, so dass sich dieses über den Aufnahmespalt 9 erstreckt und vorder- und hinterseitig die Schenkel 6, 7 überragt. Das Abstandselement 11, hier als Platte mit einer vorgegebenen Dicke und Schlitzen 26, 27 ausgeführt, kann so außerhalb des Aufnahmespalts 9 mittels Arretierungen 24, 25 positionsgenau und lösbar an den Schenkeln 6, 7 fixiert werden. Es ist möglich, dass hierfür die erste Arretierung 24 (hier nach Art eines Keils ausgeführt) in den ersten Schlitz 26 des Abstandselements 11 eingeführt werden kann, wobei die erste Arretierung 24 flächig an dem ersten Schenkel 6 anliegt. Es ist möglich, dass weiter die zweite Arretierung 25 (hier ebenfalls nach Art eines Keils ausgeführt) in den zweiten Schlitz 27 des Abstandselements 11 eingeführt wird, wobei die zweite Arretierung 25 flächig an dem zweiten Schenkel 7 anliegt. Insbesondere ist so ermöglicht, die Lage des Abstandselements 11 in Umfangsrichtung 21 und in vertikaler Richtung 22 sicher zu positionieren.

Weiter ergibt sich aus diesen Figuren auch, dass die zweite Stoßkante 18 der (oberen) ersten Metallplatte 2 in dem Aufnahmespalt 9 auf dem Abstandselement 11 aufliegt. Ebenso ist zu erkennen, dass das Abstandselement 11 auf der ersten Stoßkante 17 der (unteren) zweiten Metallplatte 3 aufliegt. Es ergibt sich daher die Situation, dass mittels des Abstandselements 11 eine vorgegebene Distanz 35 zwischen zweiter Stoßkante 18 der (oberen) ersten Metallplatte 2 und erster Stoßkante 17 der (unteren) zweiten Metallplatte 3 eingestellt wird. Diese Distanz 35 kann somit exakt die Schweißgeometrie der beiden gegenüberliegenden Stoßkanten 17, 18 einstellen.

Fig. 7 veranschaulicht (Schnittansicht von oben) eine Ausgestaltung eines Ausrichtmittels 10 mit einem Einstellelement 12, mittels dem die Spaltweite 13 des Aufnahmespalts 9 einstellbar ist. Die Schenkel 6, 7 weisen vorderseitig und rückseitig und auf selbem Höhenniveau Einstellelemente 12 auf, die beispielsweise hin bzw. weg zum Aufnahmespalt 9 beweglich und feststellbar sind. Die Einstellelemente 12 (z. B. in Form von Schrauben) können insbesondere (separat) aufeinander zu oder voneinander weg bewegt werden. Derart kann die Spaltweite 13 an die (lokale) Plattendicke 36 der im Aufnahmespalt 9 aufgenommenen Metallplatte 2, 3 eingestellt werden.

Schließlich wird noch ein Ausführungsbeispiel einer Klemmzwinge 16 anhand der Figuren 8 und 9 erläutert. Hierbei ist wiederum die montierte Situation veranschaulicht, wenn also die Klemmzwinge 16 mit den Metallplatten 2, 4 interagiert. Die Klemmzwinge umfasst zwei Bügel 28, die die (obere) erste Stoßkante 17 der beiden Metallplatten 2, 4 umgreift. Zwischen den Bügeln 28 und oberhalb der ersten Stoßkante 17 ist eine Aufhängung 23 vorgesehen. Unterhalb der ersten Stoßkante 17 ist eine Leiste 29 mit mehreren Einstellelementen 12 vorgesehen. Die Leiste 29 überragt die Seiten 30 (bzw. laterale Stoßkanten) der Metallplatten 2, 4, so dass nahe der jeweiligen (oberen) ersten Stoßkante 17 ein Teil der Einstellelemente 12 mit der ersten Metallplatte 2 und ein anderer Teil der Einstellelemente 12 mit der dritten Metallplatte 4 in (lösbarem) Eingriff gelangt bzw. dort anliegt. Damit können gerade diese Eckbereiche der Metallplatten 2, 4 einfach eingestellt werden.

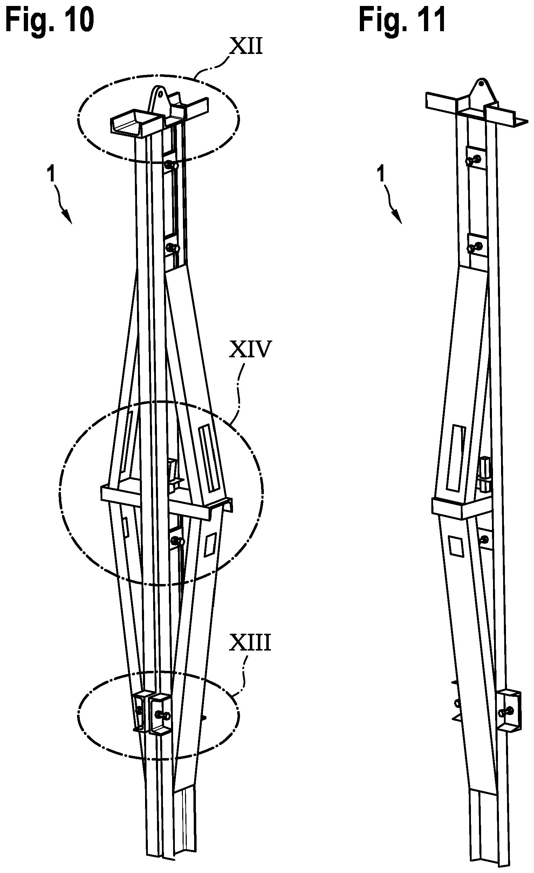

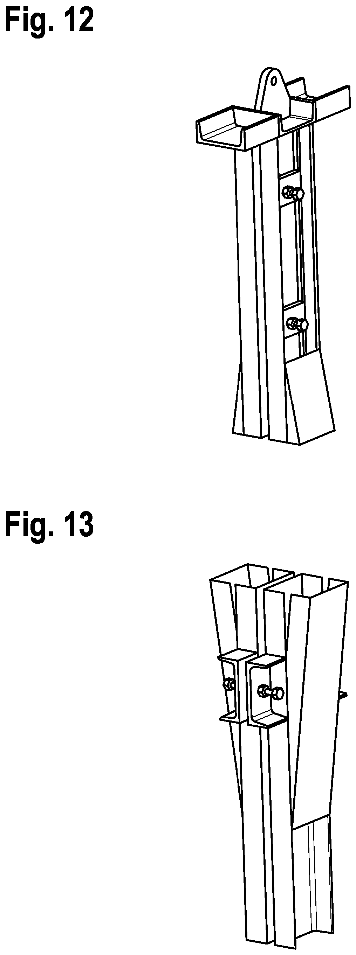

Weiterhin zeigen Fig. 10 bis 14 verschiedene perspektivische Ansichten der Vorrichtung aus Fig. 3. Dabei zeigen die Fig. 12, 13 und 14 jeweils Detailansichten, die in Fig. 10 markiert sind.

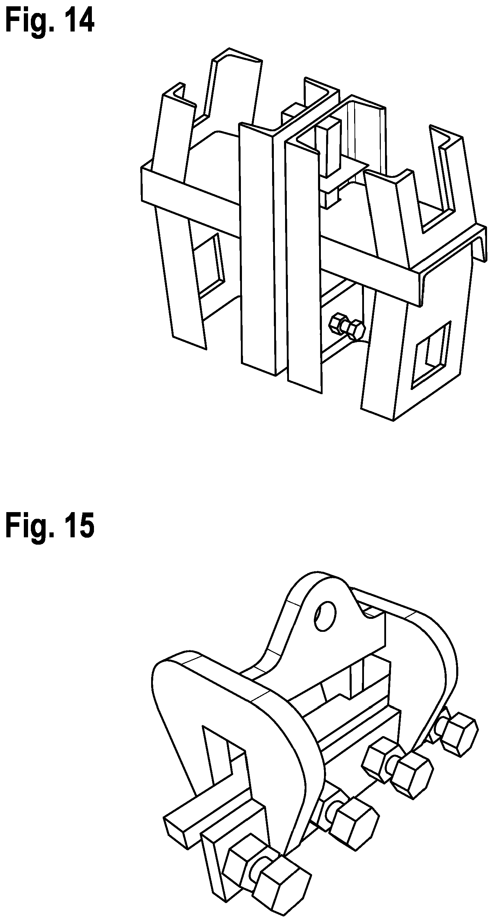

Fig. 15 zeigt weiterhin beispielhaft eine perspektivische Ansicht der Klemmzwinge 16 aus Fig. 8.

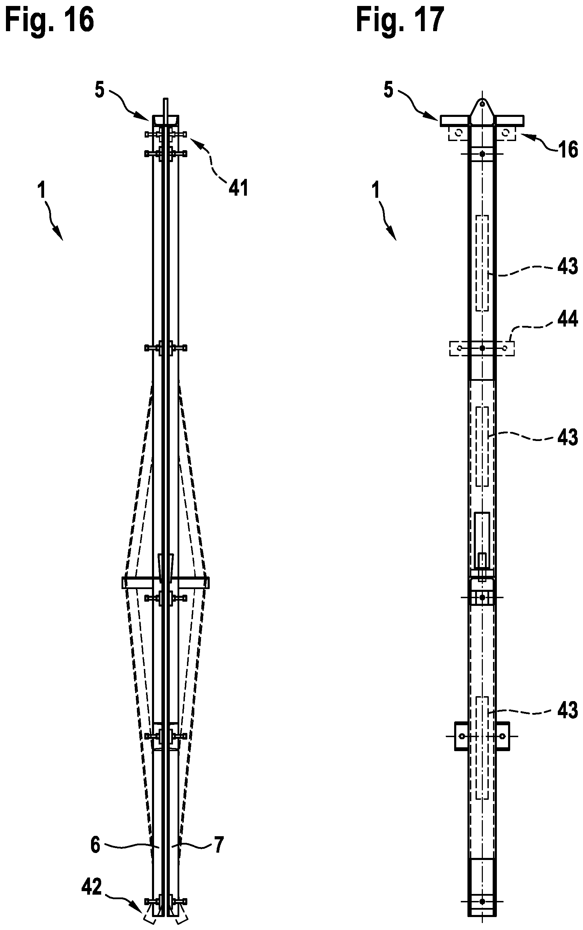

Fig. 16 und 17 zeigen vorteilhafte Modifikationen der hier beschriebenen Vorrichtung 1.

Das Auflager 5 kann eine Verschiebeeinheit 41 umfassen, mittels derer die Vorrichtung 1 auf einer Stoßkante der Metallplatte verschieblich ist. Die Verschiebeeinheit kann mit Einstellelementen (vgl. 12 in Fig. 7) zur Positionierung und Arretierung ausgestattet sein. Die Verschiebeeinheit kann eine Rollenlagerung und eine Feststellbremse umfassen.

Weiterhin können die Schenkel 6, 7 der Vorrichtung 1 am unteren bzw. offenen Ende 42 leicht abgewinkelt sein, zum vorteilhaft leichten Aufschieben der Vorrichtung 1 auf die Metallplatte.

Gemäß der Darstellung nach Fig. 17 ist gemäß einer weiteren vorteilhaften Ausgestaltung die Vorrichtung 1 mit einem Auflager 5 ausgebildet, welches eine integrierte Klemmzwinge 16 umfasst. In diesem Zusammenhang kann weiterhin vorteilhaft vorgesehen sein, dass in die Schenkel 6, 7 in Erstreckungsrichtung verlaufende Ausnehmungen 43 eingebracht sind, durch die die darunter verlaufenden, vertikalen Stoßkanten der in Umfangsrichtung benachbarten Metallplatten (abschnittsweise) schweißbar sind.

Optional ist in Fig. 17 auch ein Adapter 44 gezeigt, der beispielsweise eine Verbreiterung des Schenkels 6,7 in Umfangsrichtung umfasst, so dass die Einstellelemente weiter lateral versetzt angreifen können.

Die hier offenbarten Vorrichtungen und Verfahren vereinfachen deutlich das Ausrichten und/oder Schweißen der Metallplatten. Weiter ist damit ermöglicht, diese Prozesse deutlich schneller und sicherer auszuführen und/oder auf die sonst übliche Materialprüfung nach Entfernen von angeschweißten Profilen verzichten zu können. Daher sind diese Prozesse nun auch kostengünstiger und weniger dokumentationspflichtig.

### Bezugszeichenliste

- 1: Vorrichtung
- 2: erste Metallplatte
- 3: zweite Metallplatte
- 4: dritte Metallplatte
- 5: Auflager
- 6: erster Schenkel
- 7: zweiter Schenkel
- 8: Erstreckungsrichtung
- 9: Aufnahmespalt
- 10: Ausrichtmittel
- 11: Abstandselement
- 12: Einstellelement
- 13: Spaltweite
- 14: Länge
- 15: Set
- 16: Klemmzwinge
- 17: erste Stoßkante
- 18: zweite Stoßkante
- 19: Tank
- 20: Schweißnaht
- 21: Umfangsrichtung
- 22: Vertikale Richtung
- 23: Aufhängung
- 24: erste Arretierung
- 25: zweite Arretierung
- 26: erster Schlitz
- 27: zweiter Schlitz
- 28: Bügel
- 29: Leiste
- 30: Seite
- 31: Weite
- 32: Breite
- 33: Strebe
- 34: Basis
- 35: Distanz
- 36: Plattendicke
- 37: Tankwand
- 38: Dachkonstruktion
- 39: Laterale Stoßkante
- 40: Abstandselementöffnungen
- 41: Verschiebeeinheit
- 42: offenes Ende
- 43: Ausnehmung
- 44: Adapter

## Patentansprüche

1. Vorrichtung (1) zum Ausrichten von übereinander anordenbaren Metallplatten (2, 3) beim Stoßschweißen, zumindest umfassend ein Auflager (5) und zwei Schenkel (6, 7), die mit dem Auflager (5) verbunden sind und sich in eine Erstreckungsrichtung (8) von dem Auflager (5) weg erstrecken, wobei die Schenkel (6, 7) zwischen sich und in Erstreckungsrichtung (8) einen Aufnahmespalt (9) für die Metallplatten (2, 3) ausbilden und mehrere Ausrichtmittel (10) zur Lagefixierung der Metallplatten (2, 3) in dem Aufnahmespalt (9) vorgesehen sind, **dadurch gekennzeichnet, dass** die Ausrichtmittel (10) ein Abstandselement (11) umfassen, welches den Aufnahmespalt (9) überspannt und an jedem der beiden Schenkel (6, 7) fixierbar ist, wobei das Abstandselement (11) ein Stützlager ist, auf dem eine in dem Aufnahmespalt (9) positionierte Metallplatte (2, 3) auflegbar und transportierbar ist und wobei mit dem Abstandselement (11) eine Distanz (35) zu einer benachbarten, zu verschweißenden Metallplatte (2, 3) einstellbar ist, wenn die Vorrichtung (1) mit der aufgenommenen Metallplatte (2, 3) über das Abstandselement (11) auf einer Stoßkannte (17, 18) der benachbarten, zu verschweißenden Metallplatte (2, 3) zur Auflage kommt.

2. Vorrichtung (1) nach Anspruch 1, wobei die Ausrichtmittel (10) mehrere in Erstreckungsrichtung (8) voneinander beabstandete Einstellelemente (12) umfassen, mittels derer eine Spaltweite (13) des Aufnahmespalts (9) einstellbar ist.

3. Vorrichtung (1) nach einem der vorhergehenden Ansprüche, wobei die Schenkel (6, 7) eine Länge (14) in Erstreckungsrichtung (8) von mindestens 3 Metern aufweisen.

4. Vorrichtung (1) nach einem der vorhergehenden Ansprüche, wobei die Schenkel (6, 7) mit Stahlträgern gebildet sind.

5. Set (15) zum Ausrichten von Metallplatten (2, 3, 4) beim Stoßschweißen, umfassend mindestens eine Vorrichtung (1) nach einem der vorhergehenden Ansprüche und mindestens eine Klemmzwinge (16) für nebeneinander anordenbare Metallplatten (2, 4).

6. Verfahren zum Ausrichten von Mettallplatten (2, 3) für einen Schweißvorgang, umfassend zumindest die folgenden Schritte:
a. Bereitstellen mindestens einer Vorrichtung (1) nach einem der Ansprüche 1 bis 4,
b. Auflegen eines Auflagers (5) der Vorrichtung (1) auf eine erste Stoßkante (17) einer ersten Metallplatte (2), so dass diese sich teilweise durch einen Aufnahmespalt (9) der Vorrichtung (1) hindurch erstreckt,
c. Positionieren der ersten Metallplatte (2) über einer zweiten Metallplatte (3) mit Hilfe der Vorrichtung (1), so dass die zweite Metallplatte (3) sich auch teilweise durch den Aufnahmespalt (9) hindurch erstreckt,
d. Fixieren der Lage der Metallplatten (2, 3) zueinander in dem Aufnahmespalt (9) mittels mehrerer Ausrichtmittel (10) der Vorrichtung (1).

7. Verfahren nach Anspruch 6, bei dem Schritt c. oder Schritt d. ein Hindurchstecken eines Abstandselements (11) durch den Aufnahmespalt (9) und beidseitiges Fixieren des Abstandselements (11) an je einem Schenkel (6, 7) umfasst.

8. Verfahren nach einem der Ansprüche 6 oder 7, bei dem Schritt d. zumindest das Einstellen einer Spaltweite (13) oder einer Klemmung der Metallplatte (2, 3) in dem Aufnahmespalt (9) umfasst.

9. Verfahren zur Herstellung eines Tanks (19), aufgebaut mit miteinander verschweißten Metallplatten (2, 3, 4), wobei das Verfahren zumindest folgendes umfasst:
x) Ausrichten einer anzuschweißenden ersten Mettallplatte (2) hin zu einer zweiten Metallplatte (3) mittels einer Vorrichtung (1) nach einem der Ansprüche 1 bis 4 und/oder mittels eines Verfahrens nach einem der Ansprüche 6 bis 8,
y) Stoßschweißen zumindest der ersten Metallplatte (2) mit der zweiten Metallplatte (3),
z) Entfernen der mindestens einen Vorrichtung (1).

10. Verwendung einer Vorrichtung (1) nach einem der Ansprüche 1 bis 4 zum Transportieren, Ausrichten und Schweißen von Metallplatten (2, 3, 4) bei der Herstellung von gasdichten Fluid-Tanks (19).

## Claims

1. A device (1) for aligning metal plates (2, 3) that are arranged one above the other during butt welding, comprising at least a support (5) and two legs (6, 7) that are connected to the support (5) and extend in an extension direction (8) away from the support (5), wherein the legs (6, 7) form a receiving gap (9) for the metal plates (2, 3) between them and in the extension direction (8), and a plurality of alignment means (10) for fixing the position of the metal plates (2, 3) in the receiving gap (9) are provided, **characterized in that** the alignment means (10) comprise a spacing element (11) which spans the receiving gap (9) and can be fixed to each of the two legs (6, 7), wherein the spacing element (11) is a support rest on which a metal plate (2, 3) positioned in the receiving gap (9) can be placed and transported, and wherein the spacing element (11) establishes a distance (35) to an adjacent metal plate (2, 3) to be welded when the device (1) with the accommodated metal plate (2, 3) comes to rest via the spacing element (11) on a butt edge (17, 18) of the adjacent metal plate (2, 3) to be welded.

2. Device (1) according to claim 1, wherein the alignment means (10) comprise a plurality of adjustment elements (12) spaced apart from one another in the extension direction (8), by means of which a gap width (13) of the receiving gap (9) can be adjusted.

3. Device (1) according to one of the preceding claims, wherein the legs (6, 7) have a length (14) in the extension direction (8) of at least 3 meters.

4. Device (1) according to one of the preceding claims, wherein the legs (6, 7) are formed from steel beams.

5. Set (15) for aligning metal plates (2, 3, 4) during butt welding, comprising at least one device (1) according to any of the preceding claims and at least one clamp (16) for metal plates (2, 4) that are arranged side by side.

6. Method for aligning metal plates (2, 3) for a welding process, comprising at least the following steps:
a. providing at least one device (1) according to any one of claims 1 to 4,
b. placing a support (5) of the device (1) on a first butt edge (17) of a first metal plate (2), such that the first metal plate (2) extends partially through a receiving gap (9) of the device (1),
c. positioning the first metal plate (2) over a second metal plate (3) using the device (1), such that the second metal plate (3) also extends partially through the receiving gap (9),
d. fixing the relative position of the metal plates (2, 3) to one another in the receiving gap (9) by means of a plurality of alignment means (10) of the device (1).

7. Method according to claim 6, wherein step c. or step d. comprises inserting a spacing element (11) through the receiving gap (9) and securing the spacing element (11) on both sides to a respective one of the two legs (6, 7).

8. Method according to any of claims 6 or 7, wherein step d. comprises at least adjusting a gap width (13) or clamping the metal plate (2, 3) in the receiving gap (9).

9. A method for manufacturing a tank (19) constructed from metal plates (2, 3, 4) welded together, wherein the method comprises at least the following:
x) aligning a first metal plate (2) to be welded with a second metal plate (3) using a device (1) according to any one of claims 1 to 4 and/or using a method according to any one of claims 6 to 8,
y) butt welding at least the first metal plate (2) to the second metal plate (3),
z) removing the at least one device (1).

10. Use of a device (1) according to any one of claims 1 to 4 for transporting, aligning, and welding metal plates (2, 3, 4) for the manufacture of gas-tight fluid tanks (19).

## Revendications

1. Dispositif (1) pour l'alignement de plaques métalliques (2, 3) superposables lors du soudage bout à bout, comprenant au moins un appui (5) et deux branches (6, 7) reliées à l'appui (5) et s'étendant à partir de l'appui (5) dans une direction d'extension (8), les branches (6, 7) définissant entre elles et dans la direction d'extension (8) une fente de réception (9) pour les plaques métalliques (2, 3), et plusieurs moyens d'alignement (10) étant prévus pour le maintien en position des plaques métalliques (2, 3) dans la fente de réception (9), **caractérisé en ce que** les moyens d'alignement (10) comprennent un élément d'espacement (11) qui enjambe la fente de réception (9) et peut être fixé sur chacune des deux branches (6, 7), l'élément d'espacement (11) étant un palier d'appui sur lequel une plaque métallique (2, 3) positionnée dans la fente de réception (9) peut être posée et transportée, et une distance (35) par rapport à une plaque métallique adjacente (2, 3) à souder pouvant être réglée au moyen de l'élément d'espacement (11), lorsque le dispositif (1), avec la plaque métallique reçue (2, 3), vient en appui par l'intermédiaire de l'élément d'espacement (11) sur un bord d'about (17, 18) de la plaque métallique adjacente (2, 3) à souder.

2. Dispositif (1) selon la revendication 1, dans lequel les moyens d'alignement (10) comprennent plusieurs éléments de réglage (12) espacés les uns des autres dans la direction d'extension (8), au moyen desquels une largeur de fente (13) de la fente de réception (9) peut être réglée.

3. Dispositif (1) selon l'une des revendications précédentes, dans lequel les branches (6, 7) présentent une longueur (14) dans la direction d'extension (8) d'au moins 3 mètres.

4. Dispositif (1) selon l'une des revendications précédentes, dans lequel les branches (6, 7) sont formées de poutres en acier.

5. Ensemble (15) pour l'alignement de plaques métalliques (2, 3, 4) lors du soudage bout à bout, comprenant au moins un dispositif (1) selon l'une des revendications précédentes et au moins un serre-joint (16) pour des plaques métalliques (2, 4) disposables côte à côte.

6. Procédé pour l'alignement de plaques métalliques (2, 3) en vue d'une opération de soudage, comprenant au moins les étapes suivantes :
a. fourniture d'au moins un dispositif (1) selon l'une des revendications 1 à 4,
b. pose d'un appui (5) du dispositif (1) sur un premier bord d'about (17) d'une première plaque métallique (2), de sorte que celle-ci s'étend partiellement à travers une fente de réception (9) du dispositif (1),
c. positionnement de la première plaque métallique (2) au-dessus d'une deuxième plaque métallique (3) à l'aide du dispositif (1), de sorte que la deuxième plaque métallique (3) s'étend également partiellement à travers la fente de réception (9),
d. fixation de la position des plaques métalliques (2, 3) l'une par rapport à l'autre dans la fente de réception (9) au moyen de plusieurs moyens d'alignement (10) du dispositif (1).

7. Procédé selon la revendication 6, dans lequel l'étape c. ou l'étape d. comprend l'enfilage d'un élément d'espacement (11) à travers la fente de réception (9) et la fixation de l'élément d'espacement (11) des deux côtés sur une branche respective (6, 7).

8. Procédé selon l'une des revendications 6 ou 7, dans lequel l'étape d. comprend au moins le réglage d'une largeur de fente (13) ou un serrage de la plaque métallique (2, 3) dans la fente de réception (9).

9. Procédé de fabrication d'un réservoir (19), constitué de plaques métalliques (2, 3, 4) soudées entre elles, le procédé comprenant au moins :
x) l'alignement d'une première plaque métallique (2) à souder en direction d'une deuxième plaque métallique (3) au moyen d'un dispositif (1) selon l'une des revendications 1 à 4 et/ou au moyen d'un procédé selon l'une des revendications 6 à 8,
y) le soudage bout à bout d'au moins la première plaque métallique (2) avec la deuxième plaque métallique (3),
z) le retrait du ou des dispositifs (1).

10. Utilisation d'un dispositif (1) selon l'une des revendications 1 à 4 pour le transport, l'alignement et le soudage de plaques métalliques (2, 3, 4) lors de la fabrication de réservoirs de fluide étanches aux gaz (19).
